# EUROPÄISCHE PATENTSCHRIFT

(11) **EP 3 350 816 B1**
(45) Veröffentlichungstag und Bekanntmachung des Hinweises auf die Patenterteilung: **11.11.2020**
(21) Anmeldenummer: 16758096.8
(22) Anmeldetag: 03.08.2016
(51) Int. Cl.: H01F 7/16, F16K 31/06, F16K 31/08, F01L 13/00

(54) **ELEKTROMAGNETISCHE AKTUATORVORRICHTUNG SOWIE SYSTEM MIT DIESER**
ELECTROMAGNETIC ACTUATOR DEVICE AND SYSTEM INCLUDING THEREOF
DISPOSITIF D'ACTIONNEUR ÉLECTROMAGNÉTIQUE ET SYSTÈME L'INCLUANT

(30) Priorität: 17.09.2015 DE 102015115684
(43) Veröffentlichungstag der Anmeldung: 25.07.2018
(73) Patentinhaber: Eto Magnetic GmbH, 78333 Stockach (DE)
(72) Erfinder: FANGAUER, Philipp, 78465 Konstanz (DE); BÜRSSNER, Jörg, 78234 Engen (DE)
(74) Vertreter: Patentanwälte Behrmann Wagner PartG mbB
(86) Internationale Anmeldenummer: PCT/EP2016/068547
(87) Internationale Veröffentlichungsnummer: WO 2017/045835

(56) Entgegenhaltungen:
- DE-A1- 10 240 774
- DE-A1-102009 015 833
- DE-A1-102012 107 281
- DE-A1-102012 107 922
- DE-U1-202013 105 776

## Beschreibung

Die Erfindung betrifft eine, bevorzugt bistabile, vorzugsweise Permanentmagnetmittel umfassende, elektromagnetische Aktuatorvorrichtung gemäß dem Oberbegriff des Anspruchs 1, mit einer stationären, bestrombaren Spuleneinheit sowie einer entlang einer Verstellachse bewegbar geführten Ankereinheit, welche als Reaktion auf die Bestromung der Spuleneinheit relativ zu der Spuleneinheit bewegbar ist, wobei die ein- oder mehrteilige Ankereinheit zum Zusammenwirken mit einem abtriebsseitig der Ankereinheit vorsehbaren Stellpartner, insbesondere einer bevorzugt eine Verstellnut aufweisenden Nockenwelle, in einer Abtriebsrichtung entlang einer Verstellachse zwischen einer inneren stabilen Parkposition und einer ausgefahrenen stabilen Stellposition verstellbar sowie um die Verstellachse verdrehbar ist und wobei der Ankereinheit sich an einem, bevorzugt drehfest angeordneten, Widerlagerbauteil abstützende Federmittel derart zugeordnet sind, dass diese die Ankereinheit bei der Verstellbewegung in die Abtriebsrichtung federkraftbeaufschlagen, sich dabei zumindest teilweise entspannen und bevorzugt die Ankereinheit auch noch in der Stellposition federkraftbeaufschlagen. Ferner betrifft die Erfindung ein System gemäß Anspruch 9, welches neben einer elektromagnetischen Aktuatorvorrichtung einen Stellpartner umfasst, der die Ankereinheit in ihrer, insbesondere aus einem Aktuatorgehäuse ausgefahrenen, Stellposition mit einer die Ankereinheit um die Verstellachse verdrehenden Kraft baufschlagend ausgebildet ist.

Aus dem Stand der Technik sind elektromagnetische Stellvorrichtungen als Aktuatoren, insbesondere für eine Nockenwellenverstelleinheit oder dgl. Aggregat eines Verbrennungsmotors seit langem bekannt. So zeigt etwa das deutsche Patent DE 102 40 774 der Anmelderin eine derartige Technologie, bei welcher eine Permanentmagnetmittel aufweisende Ankereinheit endseitig einen Stößel oder Stößelabschnitt zum Zusammenwirken mit einem Stellpartner (etwa einer Stellnut einer Nockenwelle) ausbildet und relativ zu einer stationären Spuleneinheit als Reaktion auf deren Bestromung bewegbar ist. Konkret wird bei derartigen Vorrichtungen ein als Reaktion auf die Bestromungen abstoßendes Elektromagnetfeld erzeugt, welches die Ankereinheit von einer Parkposition von einem Kern ablöst und in einer Abtriebsrichtung auf eine Eingriffsposition (Stellposition) mit dem Stellpartner antreibt. Derartige, als bekannt vorausgesetzte Vorrichtungen sind nicht nur elektromagnetisch und im Hinblick auf ihr Dynamikverhalten (Kraft- und Geschwindigkeitsentwicklung) optimiert, auch eignen sich diese Vorrichtungen insbesondere günstig für eine Großserienproduktion. Die in der DE 102 40 774 beschriebene elektromagnetische Stellvorrichtung kann auch federkraftunterstützt ausgebildet sein, derart, dass die Bewegung der Ankereinheit in die Eingriffsposition federkraftunterstützt erfolgt, wobei sich die hierzu notwendigen Federmittel an der Ankereinheit abstützen.

In der DE 10 2012 107 922 A1 der Anmelderin ist eine alternative elektromagnetische Stellvorrichtung beschrieben worden, deren Ankereinheit endseitig ebenfalls einen Stößel bzw. Stößelabschnitt zum Zusammenwirken mit einem Stellpartner, insbesondere einer Stellnut einer Nockenwelle aufweist. Im Gegensatz zu der in der DE 102 40 774 beschriebenen Technologie weist die Ankereinheit keine Permanentmagnetmittel auf - diese sind wie die Spuleneinheit ortsfest angeordnet und so relativ zu der Spuleneinheit angeordnet, dass bei Bestromung der Spuleneinheit der Permanentmagnetfluss aus einem Abschnitt der permanentmagnetfreien Ankereinheit verdrängt wird, so dass diese Feder von Federmitteln aktuiert in einer Abtriebsrichtung auf eine Eingriffsposition mit dem Stellpartner bewegt ist.

Beiden vorgenannten Varianten von elektromagnetischen Stellvorrichtungen zur Verstellung einer Nockenwelle eines Verbrennungsmotors ist gemeinsam, dass die Ankereinheit ein Stellglied eines Nockenwellenverstellmechanismus bildet und in ihrer Stellposition in die Nut einer Nockenwelle eingreift. Dabei ergibt sich das Problem, dass die Ankereinheit während des axialen Verschiebevorgangs der Nockenwelle an der Flanke einer Nut anliegt und sich dort durch die Rotationsbewegung der Nockenwelle abwälzt, wodurch die Ankereinheit während eines Verschiebevorgangs der Nockenwelle zunächst in die eine und anschließend in die andere Richtung um ihre axiale Verstellachse dreht. Bei einem vorbeschriebenen Aktuatorprinzip, bei dem Federmittel, die sich einends an der Ankereinheit und anderenends an einem feststehenden Widerlagerbauteil abstützen und gleichzeitig eine Federkraft auf die sich drehende Ankereinheit ausüben, führt dies zwangsläufig zu einem Verschleiß zwischen den reibenden Bauteilen. Im ungünstigsten Fall kann dieser Effekt auch dazu führen, dass das wenn sich die Ankereinheit entgegen einer Windungsrichtung der beispielsweise als Schraubendruckfeder ausgebildeten Federmittel dreht, sich die Federmittel und die Ankereinheit verkeilen können, mit der Folge, dass die Federmittel aufgewunden werden. Da bei dem zuvor beschriebenen Aktuatortypen nur vergleichsweise geringe Federsteifigkeiten zu dem gewünschten Verstellverhalten der Ankereinheit führen, können bei gegebenen Bauraumanforderungen bisher nur Federn mit verhältnismäßig dünnen Wandstärken eingesetzt werden, die besonders anfällig sind für ein zuvor beschriebenes Aufwinden.

Weitere elektromagnetische Aktuatorvorrichtungen sind aus DE 10 2009 015 833 A1, DE 10 2012 107 281 A1 und DE 20 2013 105 776 U1 bekannt.

Ausgehend von dem vorgenannten Stand der Technik liegt der Erfindung die Aufgabe zugrunde gattungsgemäße elektrische Aktuatorvorrichtungen, insbesondere für den Einsatz in Nockenwellenverstellsystemen derart zu verbessern, dass der Verschleiß von die Ankereinheit axial in Richtung Stellposition antreibenden Federmitteln, trotz einer vom Stellpartner induzierten Verdrehbewegung der Ankereinheit minimiert wird, ebenso wie die Gefahr eines Aufwindens der Federmittel.

Diese Aufgabe wird mit einer elektromagnetischen Aktuatorvorrichtung mit den Merkmalen des Anspruchs 1 gelöst, d.h. bei einer gattungsgemäßen Aktuatorvorrichtung dadurch, dass sich die Federmittel in der Stellposition der Ankereinheit über Drehentkopplungsmittel zur Entkopplung einer Verdrehbewegung der Ankereinheit von den Federmitteln um die Verstellachse an der Ankereinheit und/oder zur Entkopplung einer Verdrehbewegung der Federmittel um die Verstellachse von dem Widerlagerbauteil an dem Widerlagerbauteil abstützen.

Vorteilhafte Weiterbildungen der Erfindung sind in den Unteransprüchen angegeben.

Der Erfindung liegt der Gedanke zugrunde, eine mögliche Verdrehbewegung der Ankereinheit um die Verstellachse, insbesondere verursacht durch Wechselwirkung mit einem Stellpartner, insbesondere der Nut einer Nockenwelle, von den Federmitteln zu entkoppeln und zwar über, bevorzugt starre, Drehentkopplungsmittel, über die sich Federmittel erfindungsgemäß an der Ankereinheit oder dem Widerlagerbauteil abstützen. Alternativ entkoppeln die Drehentkopplungsmittel eine Drehbewegung von mit der Ankereinheit (insbesondere mit der Ankereinheitsdrehzahl) mitrotierten Federmitteln von dem, vorzugsweise drehfest angeordneten, Widerlagerbauteil.

Anders ausgedrückt stützen sich die Federmittel nicht unmittelbar an der Ankereinheit und dem Widerlagerbauteil ab, vielmehr sind erfindungsgemäß zwischen den Federmitteln und zumindest einem der Aktuatorbauteile (Ankereinheit und Widerlagerbauteil) Drehentkopplungsmittel angeordnet, die die Federkraft axial übertragen und die je nach Ausführungsvariante eine Drehbewegung der Federmittel, zumindest weitgehend vermeiden und/oder die einen Reibverschluss von mit der Ankereinheit mitrotierenden Federmitteln und dem Widerlagerbauteil vermeiden, in dem Drehentkopplungsmittel axial zwischen den Federmitteln und dem Widerlagerbauteil angeordnet sind. Durch das erfindungsgemäße Vermeiden eines unmittelbaren Abstützens der Federmittel an der Ankereinheit und/oder dem Widerlagerbauteil wird ein Reibverschleiß der Federmittel minimiert und darüber hinaus wird ein Aufwinden der beispielsweise als Schraubendruckfeder ausgebildeten Federmittel vermieden, auch wenn sich die Ankereinheit entgegen der Windungsrichtung der Federmittel, insbesondere aktuiert durch eine Verstellbewegung des Stellpartners, der Aktuatorvorrichtung relativ zu der stationären Spuleneinheit verdreht.

Besonders bevorzugt handelt es sich bei der elektromagnetischen Aktuatorvorrichtung um die Aktuatorvorrichtung eines Nockenwellenverstellsystems eines Kraftfahrzeugs - auf diese Anmeldung ist die erfindungsgemäße elektromagnetische Aktuatorvorrichtung nicht beschränkt - grundsätzlich eignet sich ihr Einsatz für alle Anwendungen, in denen die ein- oder mehrteilige, vorzugsweise als langgestreckter Stößel ausgebildete oder einen solchen umfassende Ankereinheit in ihrer, vorzugsweise aus einem Aktuatorgehäuse ausgefahrenen Stellung mit dem Stellpartner zusammenwirkt, der eine die Ankereinheit um ihre, vorzugsweise von einer Längsmittelachse der Ankereinheit gebildete Verstellachse verdrehende Kraft ausübt, aufgrund derer die Ankereinheit über einen Umfangswinkel, insbesondere von mehr als 10°, vorzugsweise von über 360° relativ zu den stationären Bauteilen der Aktuatoreinheit, insbesondere der Spuleneinheit und/oder einem Polkern verdreht wird.

Bevorzugt sind die Drehentkopplungsmittel, zumindest deren der Ankereinheit bzw. dem Widerlagerbauteil zugewandte Oberfläche, aus einem Material mit guten Gleiteigenschaften ausgebildet. Bevorzugt sollten die Drehmagnetmittel aus einem nicht magnetischen Werkstoff ausgebildet sein, um zu verhindern, dass es zu einem radialen, magnetischen Kleben kommt, welches die Reibung erhöhen könnte. Denkbar ist der Einsatz von Messing- oder Bronzelegierungen oder auch von Niro-Stählen, wie beispielsweise 1.4305, wobei der eingesetzte Werkstoff bei Bedarf zur Verbesserung der Gleiteigenschaften beschichtet sein kann, beispielsweise mit einer PTFE-Beschichtung.

Im Hinblick auf die konkrete Ausgestaltung der elektromagnetischen Aktuatorvorrichtung gibt es wiederum unterschiedliche Möglichkeiten. So ist es beispielsweise möglich und bevorzugt, wie im Detail in der DE 10 2012 107 922 A1 beschrieben, zusätzlich zu der Spuleneinheit stationäre Permanentmagnetmittel derart vorzusehen, dass diese die Ankereinheit aufgrund ihrer Permanentmagnetkraft im unbestromten Zustand der Spuleneinheit in ihrer Parkposition (stabil) halten und dass durch Bestromen der Spuleneinheit die permanentmagnetische Haftkraft reduziert wird insbesondere indem der Permanentmagnetfluss aus einem Ankereinheitsabschnitt verdrängt wird. Bei reduzierter Permanentmagnetkraft kommt dann die Federwirkung der Federmittel zum Einsatz, aufgrund derer die Ankereinheit entlang der Verstellachse in die Abtriebsrichtung verstellt wird.

Die Federmittel stützen sich dabei erfindungsgemäß über Drehentkopplungsmittel an der Ankereinheit und/oder einem Widerlagerbauteil, insbesondere einem Jochabschnitt der elektromagnetischen Aktuatoreinrichtung ab. Alternativ ist es möglich, die Aktuatorvorrichtung im Grundsatz wie in der DE 102 40 774 der Anmelderin beschrieben auszubilden, also derart, dass die Permanentmagnetmittel an der Ankereinheit angeordnet und zusammen mit dieser verstellbar sind. Bei einer solchen Ausführungsform hält ebenfalls die magnetische Haftkraft der Permanentmagnetmittel die Ankereinheit (stabil) in ihrer Parkposition. Durch Bestromen der Spuleneinheit wird ein dem permanentmagnetischen Fluss entgegengesetzter elektromagnetischer Magnetfluss erzeugt, der die Ankereinheit entlang der Verstellachse in der Abtriebsrichtung hin zum Stellpartner bewegt. Diese Verstellbewegung wird federkraftunterstützt durch Federmittel, welche sich erfindungsgemäß an der Ankereinheit und/oder einem bevorzugt drehfesten Widerlagerbauteil, insbesondere einem Polkern über Drehentkopplungsmittel abstützen.

Ganz besonders vorteilhaft ist der erfindungsgemäße Einsatz der Drehentkopplungsmittel bei einer Ausführungsform der elektromagnetischen Aktuatorvorrichtung, bei der die Federmittel bei ausreichend großer Federkraft zum alleinigen oder unterstützenden Verstellen der Ankereinheit in die Stellposition sich mittels Verstellen der Ankereinheit nicht vollständig entspannen, sondern eine Restvorspannung auch in der Stellposition aufrechterhalten bleibt, mit der sich die Federmittel auch dann noch über die Drehentkopplungsmittel axial abstützen. Insbesondere bei einer solchen Ausführungsform wäre der Reibverschleiß ohne Drehentkopplungsmittel die Gefahr eines Aufwindens der Federmittel besonders hoch. Hierauf ist die Erfindung jedoch nicht beschränkt - grundsätzlich sind die Drehentkopplungsmittel auch einsetzbar bei einer Ausführungsform des Aktuators, bei der die Federmittel in der Stellposition vollständig entspannt und ggf. nur schwerkraftbedingt axial über die Drehentkopplungsmittel, da auch bei einer solchen Ausführungsform (ohne Drehentkopplungsmittel) grundsätzlich die Gefahr eines Verkantens und damit Aufdrehens der Federmittel besteht.

Ganz besonders bevorzugt sind die Drehentkopplungsmittel dabei aus einem magnetisch nicht leitenden Material ausgebildet.

Als besonders vorteilhaft hat sich eine Ausführungsform der Aktuatorvorrichtung herausgestellt, bei der eine Kontaktfläche zwischen den Federmitteln und den Drehentkopplungsmitteln größer ist als die Auflagefläche der Drehentkopplungsmittel, mit denen diese sich an der Ankereinheit oder dem Widerlagerbauteil abstützen. Insgesamt ist es von Vorteil, wenn ein etwaiges, von Ankereinheit auf die Drehentkopplungsmittel bei einer Rotationsbewegung der Ankereinheit übertragenes Drehmoment geringer ist als ein Halte- bzw. Verbindungsmoment der, insbesondere reib- und/oder formschlüssigen Verbindung zwischen den Federmitteln und den Drehentkopplungsmitteln.

Besonders bevorzugt ist eine Ausführungsform der elektromagnetischen Aktuatorvorrichtung, bei der die Drehentkopplungsmittel mindestens ein, bevorzugt drehfest relativ zu den Federmitteln angeordnetes, Gleitlagerelement umfassen, welches sich (mit seiner Auflagefläche, insbesondere axial bezogen auf die Verstellachse) an der Ankereinheit oder an dem Widerlagerbauteil abstützt. Dabei ist es besonders zweckmäßig, wenn sich das Gleitlagerelement bei der Ausgestaltung der Federmittel als Schraubendruckfeder ein Stück weit axial in die von Federwindungen der Federmittel umschlossenen Federinnenraum hineinerstreckt. Im einfachsten und bevorzugten Fall sind die Federmittel rein reibschlüssig bezogen auf die Verdrehrichtung an den Drehentkopplungsmitteln fixiert, wobei selbstverständlich (zusätzlich oder alternativ) auch eine formschlüssige Verbindung realisierbar ist.

In Weiterbildung der Erfindung ist mit Vorteil vorgesehen, dass das Gleitlagerelement auf einer der Ankereinheit oder dem Widerlagerbauteil zugewandten Stirnseite ballig ausgeformt ist und/oder eine, zumindest näherungsweise, punktförmige, vorzugsweise von der Verstellachse durchsetzte, also eine zentrische oder mittige Auflagefläche zum Abstützen an der Ankereinheit oder dem Widerlagerbauteil aufweist. Durch vorstehende Maßnahmen wird erreicht, dass bei einer Verdrehbewegung der Ankereinheit relativ zu den Drehentkopplungsmitteln im Wesentlichen kein Hebelarm entsteht und folglich kein oder allenfalls ein äußerst geringes Drehmoment übertragen wird, sondern, bei entsprechender Vorspannung der Federmittel lediglich eine axiale Kraft. Den gleichen Vorteil hat die Ausführungsform mit balliger Stirnseite und/oder punktförmiger Auflagefläche bei einer Ausführungsform bei der sich die Drehentkopplungsmittel am Widerlagerbauteil abstützen - in diesem Fall wird bei sich mit der Ankereinheit verdrehenden Federmitteln von den Drehentkopplungsmitteln auf das Widerlagerbauteil im Wesentlichen kein oder allenfalls ein geringes Drehmoment übertragen.

Ganz grundsätzlich ist eine Ausführungsform der Drehentkopplungsmittel bevorzugt, bei der sich die Auflagefläche (Kontaktfläche der Drehentkopplungsmittel, insbesondere des Gleitlagerelementes) axial versetzt und mit Radialabstand zu einer Kontaktfläche der Federmittel zu den Drehentkopplungsmitteln angeordnet ist.

Für den alternativen Fall einer im Wesentlichen nicht punktförmigen Auflagefläche der Drehentkopplungsmittel ist es möglich, am Gleitlagerelement eine ring- oder scheibenförmige Auflagefläche zum Abstützen an der Ankereinheit oder dem Widerlagerbauteil vorzusehen, wobei auch hier bevorzugt die Auflagefläche zwar axial versetzt zu einer Kontaktfläche zwischen den Federmitteln und dem Gleitlagerelement angeordnet ist, letztere jedoch zusätzlich mit Radialabstand außerhalb der Auflagefläche des Gleitlagerelementes an der Ankereinheit bzw. dem Widerlagerelement angeordnet ist, um somit sicher eine festere Verbindung mit den Federmitteln und dem Gleitlagerelement zu schaffen, die nicht gelöst werden kann durch ein etwaiges zwischen Ankereinheit und Auflagefläche des Gleitelementes oder Widerlagerbauteil und Auflagefläche des Gleitelementes wirkenden Drehmomentes.

Wie eingangs erwähnt, ist es besonders zweckmäßig, wenn die Federmittel eine sich axial an den Drehentkopplungsmitteln abstützende Schraubendruckfeder umfassen oder als solche ausgebildet sind, wobei es besonders zweckmäßig ist, wenn die Drehentkopplungsmittel axial in einen von den Windungen der Schraubendruckfeder umschlossenen Hohlraum hineinragen, insbesondere von den Federmitteln dort geklemmt sind. Für eine optimale Führung der Federmittel bzw. für ein Verhindern eines seitlichen Ausweichens der Federmittel ist es vorteilhaft, wenn die Federmittel zumindest abschnittsweise innerhalb eines Axialkanals der Ankereinheit und/oder des Widerlagers angeordnet sind.

Die Erfindung führt auch auf ein System, umfassend eine, bevorzugt bistabile, erfindungsgemäße elektromagnetische Aktuatorvorrichtung sowie einen Stellpartner, der die Ankereinheit in ihrer, insbesondere aus einem Aktuatorgehäuse ausgefahrenen, Stellposition mit einer die Ankereinheit um ihre Verstellachse verdrehenden Kraft beaufschlagend ausgebildet ist.

Bevorzugt handelt es sich bei dem System um ein Nockenwellenverstellsystem und bei dem Verstellpartner um eine, bevorzugt eine Eingriffsnut (Stellnut) für die die Ankereinheit aufweisende Welle, durch deren Rotation und der zwischen der Nockenwelle und der Ankereinheit in der Stellposition auftretenden Reibung, die auf die Ankereinheit wirkende, diese um die Verstellachse verdrehende Kraft bewirkt.

Weitere Vorteile, bevorzugte Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine schematische Darstellung einer möglichen Ausgestaltungsvariante einer elektromagnetischen Aktuatorvorrichtung mit stationären Permanentmagnetmitteln,
- Fig. 2: eine alternative, erfindungsgemäße elektromagnetische Aktuatorvorrichtung zusammen mit der Ankereinheit verstellbaren Permanentmagnetmitteln,
- Fig. 3: eine schematische Darstellung eines Drehentkopplungsmittels zeigenden Details einer elektromagnetischen Aktorvorrichtung, und
- Fig. 4: ein Detail einer Aktuatorvorrichtung gemäß dem Stand der Technik ohne Drehentkopplungsmittel.

In den Figuren sind gleiche Elemente und Elemente mit der gleichen Funktion mit den gleichen Bezugszeichen gekennzeichnet.

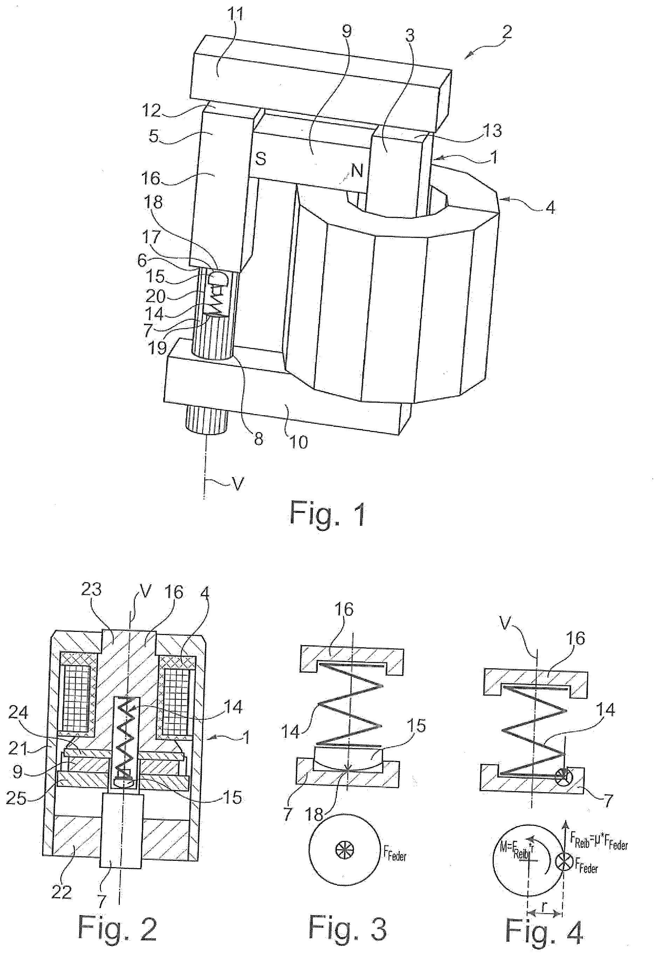

In Fig. 1 ist eine elektromagnetische Aktuatorvorrichtung 1, insbesondere für den Einsatz in einem Nockenwellenverstellsystem gezeigt. Diese umfasst eine stationäre bügelartige Jocheinheit 2, welche einen sich in Fig. 1 vertikal erstreckenden ersten Jochabschnitt 3 umfasst, um welchen herum eine stationäre Spuleneinheit 4 gebildet ist. Dem ersten Jochabschnitt 3 seitlich benachbart ist ein weiterer (zweiter) Jochabschnitt 5 zugeordnet, welcher axial und über einen Luftspalt 6 mit einer langgestreckten Aktuatoreinheit 7 zusammenwirkt, die entlang einer Verstellachse V verstellbar ist.

Wiederum über einen Luftspalt 8 wird der magnetische Flusskreis eines zwischen den Jochabschnitten 3 und 5 vorgesehenen Permanentmagnetabschnitts 9 (Permanentmagnetmittel) geschlossen und durch ein stirnseitiges Flussleitelement 10, welches den ersten Jochabschnitt 3 (über den Luftspalt 8) an die Ankereinheit 7 anbindet. Den Permanentmagnetmitteln 9 benachbart ist ein magnetisches Nebenschlusselement 11 zugeordnet, welches über geeignete Luftspalte 12, 13 Raum für eine Flussverdrängung durch Bestromung der Spuleneinheit 4 anbietet.

Ein, bevorzugt zylindrisches Gehäuse, aus welchem die Ankereinheit 7 in ihrer nicht gezeigten, relativ zu der dargestellten Parkposition verstellten Stellposition zum Zusammenwirken mit einem Stellpartner, insbesondere einer Nockenwelle herausschaut, ist aus Übersichtlichkeitsgründen nicht gezeigt.

Bezüglich der Funktionsweise einer wie zuvor beschrieben ausgebildeten elektromagnetischen Aktuatoreinheit wird auf die DE 10 2012 107 922 A1 und dort insbesondere auf Fig. 7 sowie die Figurenbeschreibung zu den Ausführungsformen gemäß Fig. 1 bis 6 verwiesen.

Solange die Spuleneinheit 4 unbestromt oder nicht ausreichend bestromt ist, sorgt der permanentmagnetische, durch die Ankereinheit 7 fließende Fluss für eine permanentmagnetische Haftkraft, die die Ankereinheit 7 stabil hält. Wird die Spuleneinheit 4 bestromt, so wird der permanentmagnetische Magnetfluss in das Nebenschlusselement 11 verdrängt und die Ankereinheit 7 wird, aktuiert über hier als beispielhaft Schraubendruckfeder ausgebildete Federmittel 14, axial verstellt aus der Parkposition in eine in der Zeichnungsebene nach unten verstellte (stabile) Stellposition, in der die Ankereinheit mit einem Stellpartner, bevorzugt einer Nockenwelle und dort bevorzugte einer entsprechenden Stellnut in an sich bekannter Weise zusammenwirkt.

Um dies zu ermöglichen, stützen sich die Federmittel 14 axial, hier beispielsweise unmittelbar (in der Zeichnung unten), an der Ankereinheit 7 ab und mittelbar, nämlich über ein als Gleitlagerelement ausgebildete Drehentkopplungsmittel 15 an einem stationären und drehfest angeordneten Widerlagerbauteil 16, welches hier beispielhaft von dem zweiten Jochabschnitt 5 gebildet ist.

Zu erkennen ist, dass die Drehentkopplungsmittel 15, konkret das Gleitlagerelement an einer dem Widerlagerbauteil 16 zugewandten Stirnseite 17 ballig ausgeformt sind bzw. ist und dadurch eine im Wesentlichen punktförmige zentrale Auflagefläche 18 bilden bzw. bildet, mit der sich die Drehentkopplungsmittel 18 axial an dem Widerlagerbauteil 16 abstützen. Die punktförmige Auflagefläche ist durchsetzt von der Verstellachse V, so dass, wie später noch erläutert werden wird, im Wesentlichen keine Drehmomente zwischen den zusammen mit der Ankereinheit 7 und den Federmitteln 14 rotierenden Drehentkopplungsmitteln 15 und dem drehfest angeordneten Widerlagerbauteil 16 übertragen werden. Bei einer alternativen, nicht gezeigten Ausführungsvariante kann zusätzlich zu dem Drehentkopplungselement 15 zwischen dem Widerlagerbauteil und den Federmitteln 14 ein weiteres Drehentkopplungselement, insbesondere ein weiteres Gleitlagerelement axial zwischen den Federmitteln 14 und der Ankereinheit 7, insbesondere einem Bohrungsgrund einer stirnseitigen Sacklochbohrung 20 in der Ankereinheit 7 vorgesehen werden. Zudem ist eine alternative Ausführungsform realisierbar, bei der anstelle der gezeigten Drehentkopplungsmittel 15 diese Drehentkopplungsmittel 15 zwischen den Federmitteln 14 und der Ankereinheit 7, bevorzugt dem Bohrungsgrund 19 angeordnet sind. Im letztgenannten Fall wird in der Stellposition durch Verdrehen der Nockenwelle im Wesentlichen kein Drehmoment auf die Drehentkopplungsmittel 15 und damit die Federmittel 14 übertragen, welche dann aufgrund des reibschlüssigen Abstützens an dem drehfest angeordneten Widerlagerbauteil 16 ebenfalls drehfest angeordnet sind, d.h. nicht mit der Ankereinheit 7 rotieren.

In Fig. 2 ist eine alternative Ausführungsform einer elektromagnetischen Aktuatorvorrichtung 1 gezeigt. Diese umfasst an einer entlang einer Verstellachse V verstellbaren Ankereinheit 7 angeordnete Permanentmagnetmittel 9, die zusammen mit der Ankereinheit 7 relativ zu einer ortfesten Spuleneinheit 4 verstellbar sind und zwar durch bestromende Spuleneinheit 4. Dies bewirkt eine abstoßende Kraft auf die Ankereinheit 7, die diese entgegen der von den Permanentmagnetmitteln 9 in der Parkposition ausgeübten Haftkraft aus der gezeigten Parkposition entlang der Verstellachse V und der Zeichnungsebene nach unten in einer ausgefahrene Stellposition aus einem Gehäuse 21 heraus verstellen. Das Gehäuse 21 selbst ist flussleitend. Weitere Bestandteile des magnetischen Flusskreises bilden das von der Ankereinheit 7 durchsetzte Joch 22 sowie ein Polkern 23, der von der Spuleneinheit 4 umschlossen ist. Zu erkennen ist, dass die Permanentmagnetmittel 9 zwischen zwei Polscheiben 24, 25 in an sich bekannter Weise aufgenommen sind.

Im Hinblick auf die Flussleitungen und Funktionsweise der elektromagnetischen Aktuatorvorrichtung 1 gemäß Fig. 2 wird auf die DE 102 40 774 der Anmelderin und dort insbesondere auf das Ausführungsbeispiel gemäß Fig. 1 verwiesen. Im Unterschied zu der dort dargestellten Ausführungsvariante ist die Verstellbewegung der Ankereinheit 7 aus der Parkposition in die Stellposition federkraftunterstützt von Federmitteln 14, die sich in der Zeichnungsebene oben am Polkern 23, genauer am Grund einer axialen Sacklochbohrung im Polkern 23 abstützen und zwar unmittelbar und anderenends mittelbar an der Ankereinheit 7, nämlich über Drehentkopplungsmittel 15, deren Funktionsweise den im Zusammenhang mit Fig. 1 beschriebenen Drehentkopplungsmitteln 15 entspricht. Im Gegensatz zu dem Ausführungsbeispiel gemäß Fig. 1 befinden sich die Drehentkopplungsmittel 15, genauer das diese bildende Gleitelement axial zwischen den als Schraubendruckfeder ausgebildeten Federmitteln und der Ankereinheit 7, so dass eine Rotationsbewegung der Federmittel 14 bei einem Rotieren der Ankereinheit 7 um die Verstellachse V vermieden wird.

In Fig. 4 ist prinzipiell das im Stand der Technik auftretende Problem dargestellt. Zu erkennen ist, dass sich Federmittel 14 sowohl unmittelbar an einem Widerlagerbauteil 16 als auch unmittelbar an einer Ankereinheit 7 abstützen. Dies führt dazu, dass unmittelbar eine Reibungskraft F_{Reib} zwischen der Ankereinheit 7 und den Federmitteln 14 wirkt, wobei die Reibungskraft der Federkraft multipliziert mit dem Reibwert zwischen Federmitteln 14 und Ankereinheit 7 entspricht. Ebenfalls führt diese Reibungskraft F_{Reib} bei einer Rotation der Ankereinheit 7 um die Verstellachse V zu einem auf die Federmittel 14 wirkenden Drehmoment M, welches der Reibungskraft F_{Reib} multipliziert mit dem Abstand r zwischen der Auflagefläche der Federmittel 14 und der Verstellachse V entspricht.

Fig. 3 zeigt im Vergleich mit Fig. 4 die veränderte Situation bei einer erfindungsgemäßen Ausgestaltung, wobei hier beispielhaft stirnseitig ballig ausgeformte Drehentkopplungsmittel 15 vorgesehen sind, und zwar beispielhaft axial zwischen den Federmitteln 14 und der Ankereinheit 7, wobei die Drehentkopplungsmittel 15 alternativ, analog zu dem Ausführungsbeispiel gemäß Fig. 1 zwischen den Federmitteln 14 und dem Widerlagerbauteil 16 angeordnet sein können. Grundsätzlich ist es auch denkbar, an beiden Axialseiten der Federmittel 14 Drehentkopplungsmittel 15 vorzusehen.

Zu erkennen ist, dass durch die punktförmige Auflagefläche 18 der Drehentkopplungsmittel 15 im Wesentlichen kein Drehmoment von der rotierenden Ankereinheit 7 auf die Drehentkopplungsmittel und die drehfest daran angeordneten Federmittel 14 übertragen wird.

### Bezugszeichenliste

- 1: elektromagnetischer Aktuator
- 2: Jocheinheit
- 3: erster Jochabschnitt
- 4: Spuleneinheit
- 5: zweiter Jochabschnitt
- 6: Luftspalt
- 7: Ankereinheit
- 8: Luftspalt
- 9: Permanentmagnetabschnitt (Permanentmagnetmittel)
- 10: Flussleitabschnitt
- 11: Nebenschlusselement
- 12: Luftspalt
- 13: Luftspalt
- 14: Federmittel
- 15: Drehentkopplungsmittel (bevorzugt ausgebildet als Gleitlagerelement)
- 16: Widerlagerbauteil
- 17: (ballige) Stirnseite
- 18: Auflagefläche
- 19: Bohrungsgrund
- 20: Sacklochbohrung
- 21: Gehäuse
- 22: Joch
- 23: Polkern (hier auch ein Widerlagerbauteil)
- 24: Polscheibe
- 25: Polscheibe
- V: Verstellachse
- F_{Reib}: Reibungskraft
- M: Drehmoment
- R: Abstand

## Patentansprüche

1. Elektromagnetische Aktuatorvorrichtung mit wenigstens einer stationären, bestrombaren Spuleneinheit (4) sowie wenigstens einer entlang einer Verstellachse (V) bewegbar geführten Ankereinheit (7), welche als Reaktion auf die Bestromung der Spuleneinheit (4) relativ zu der Spuleneinheit (4) bewegbar ist, wobei die Ankereinheit (7) zum Zusammenwirken mit einem abtriebsseitig der Ankereinheit (7) vorsehbaren Stellpartner, insbesondere einer Nockenwelle, in einer Abtriebsrichtung entlang der Verstellachse (V) zwischen einer inneren stabilen Parkposition und einer ausgefahrenen stabilen Stellposition verstellbar sowie um die Verstellachse (V) verdrehbar ist und wobei der Ankereinheit (7) sich an einem, bevorzugt drehfest angeordneten, Widerlagerbauteil (16) der Aktuatorvorrichtung abstützende Federmittel (14) der Aktuatorvorrichtung derart zugeordnet sind, dass diese die Ankereinheit (7) bei der Verstellbewegung (V) in die Abtriebsrichtung federkraftbeaufschlagen, sich dabei zumindest teilweise entspannen und bevorzugt die Ankereinheit (7) auch noch in der Stellposition federkraftbeaufschlagen,
**dadurch gekennzeichnet,**
**dass** sich die Federmittel (14) in der Stellposition der Ankereinheit (7) über Drehentkopplungsmittel (15) zur Entkopplung einer Verdrehbewegung der Ankereinheit (7) von den Federmitteln (14) um die Verstellachse (V) an der Ankereinheit (7) und/oder zur Entkopplung einer Verdrehbewegung der Federmittel (14) um die Verstellachse (V) von dem Widerlagerbauteil (16) an dem Widerlagerbauteil (16) abstützen.

2. Elektromagnetische Aktuatorvorrichtung nach Anspruch 1,
**dadurch gekennzeichnet,**
**dass** die Drehentkopplungsmittel (15) mindestens ein, bevorzugt drehfest relativ zu den Federmitteln (14) angeordnetes, Gleitlagerelement umfassen, welches sich an der Ankereinheit (7) oder an dem Widerlagerbauteil (16) abstützt.

3. Elektromagnetische Aktuatorvorrichtung nach Anspruch 2,
**dadurch gekennzeichnet,**
**dass** das Gleitlagerelement auf einer der Ankereinheit (7) oder dem Widerlagerbauteil (16) zugewandten Stirnseite ballig ausgeformt ist und/oder eine punktförmige, vorzugsweise von der Verstellachse (V) duchsetzte, Auflagefläche (18) zum Abstützen an der Ankereinheit (7) oder dem Widerlagerbauteil (15) aufweist.

4. Elektromagnetische Aktuatorvorrichtung nach Anspruch 2,
**dadurch gekennzeichnet,**
**dass** das Gleitlagerelement eine ring- oder scheibenförmige Auflagefläche (18) zum Abstützen an der Ankereinheit (7) oder dem Widerlagerbauteil (16) aufweist.

5. Elektromagnetische Aktuatorvorrichtung nach einem der vorhergehenden Ansprüche,
**dadurch gekennzeichnet,**
**dass** die Federmittel (14) eine sich axial an den Drehentkopplungsmitteln (15) abstützende Schraubendruckfeder umfassen oder als solche ausgebildet sind.

6. Elektromagnetische Aktuatorvorrichtung nach einem der vorhergehenden Ansprüche,
**dadurch gekennzeichnet,**
**dass** die Federmittel (14) abschnittsweise innerhalb eines Axialkanals der Ankereinheit (7) angeordnet sind.

7. Elektromagnetische Aktuatorvorrichtung nach einem der vorhergehenden Ansprüche,
**dadurch gekennzeichnet,**
**dass** an der Ankereinheit (7) angeordnete und zusammen mit dieser verstellbare oder stationäre Permanentmagnetmittel (9) der Aktuatorvorrichtung vorgesehen sind, die die Ankereinheit (7) in der Parkposition halten und dass die magnetische Haltekraft der Permanentmagnetmittel (9) durch Bestromen der Spuleneinheit (4) derart reduzierbar ist, dass die Ankereinheit (7) mittels der Federmittel (14) in die Abtriebsrichtung verstellbar ist.

8. Elektromagnetische Aktuatorvorrichtung nach einem der vorhergehenden Ansprüche,
**dadurch gekennzeichnet,**
**dass** die Drehentkopplungsmittel (15) aus nicht magnetischem Material, insbesondere Metall oder Kunststoff, ausgebildet sind.

9. System umfassend eine, bevorzugt bistabile, elektromagnetische Aktuatorvorrichtung nach einem der vorhergehenden Ansprüche, sowie einem Stellpartner, der die Ankereinheit (7) in ihrer, insbesondere aus einem Aktuatorgehäuse ausgefahrenen, Stellposition mit einer die Ankereinheit (7) um ihre Verstellachse (V) verdrehenden Kraft beaufschlagend ausgebildet ist.

10. System nach Anspruch 9,
**dadurch gekennzeichnet,**
**dass** das System ein Nockenwellenverstellsystem und der Stellpartner eine, bevorzugt eine Eingriffsnut für die Ankereinheit (7) aufweisende, Nockenwelle ist, die durch deren Rotation aufgrund der zwischen der Nockenwelle und der Ankereinheit (7) in deren Stellposition auftretenden Reibung die auf die Ankereinheit (7) wirkende, diese um die Verstellachse (V) verdrehende Kraft bewirkt.

## Claims

1. An electromagnetic actuator device having at least one stationary coil unit (4), which can be energized, as well as at least one armature unit (7), which can be moved along a displacement axis (V) and which can be moved with respect to the coil unit (4) in reaction to the coil unit (4) being energized, said armature unit (7) being able to be displaced between an inner stable parked position and an extended stable actuating position in an output direction along the displacement axis (V) in order to interact with an actuating element, in particular be a camshaft, which can be disposed on an output side of the armature unit (7), as well as being able to be rotated about the displacement axis (V), and spring means (14) of the actuator device, which are supported against an abutment component (16) of the actuator device, preferably disposed in a torque-proof manner, being assigned to said armature unit (7) in such a manner that said spring means apply a spring force to the armature unit (7) during a displacing movement (V) in the output direction while simultaneously at least partially relaxing and preferably apply a spring force to the armature unit (7) when in the actuating position as well,
**characterized in that**
in the actuating position of the armature unit, the spring means (14) are supported against the abutment component (16) by means of rotation decoupling means (15) for decoupling a rotational movement of the armature unit (7) from the spring means (14) about the displacement axis (V) at the armature unit (7) and/or for decoupling a rotational movement of the spring means (14) about the displacement axis (V) from the abutment component (16).

2. The electromagnetic actuator device according to claim 1,
**characterized in that**
the rotation decoupling means (15) comprise at least one sliding bearing element which is preferably disposed in a torque-proof manner with respect to the spring means (14) and which is supported against the armature unit (7) or against the abutment component (16).

3. The electromagnetic actuator device according to claim 2,
**characterized in that**
the sliding bearing element is formed in a sphere-like shape on a front side facing the armature unit (7) or the abutment component (16) and/or has a punctiform resting surface (18), preferably interspersed by the displacement axis (V), for being supported against the armature unit (7) or the abutment component (15).

4. The electromagnetic actuator device according to claim 2,
**characterized in that**
the sliding bearing element has an annular or disc-shaped resting surface (18) for being supported against the armature unit (7) or the abutment component (16).

5. The electromagnetic actuator device according to any one of the preceding claims,
**characterized in that**
the spring means (14) comprise or are designed as a helical compression spring which is axially supported against the rotation decoupling means (15).

6. The electromagnetic actuator device according to any one of the preceding claims,
**characterized in that**
the spring means (14) are disposed within an axial channel of the armature unit (7) in sections.

7. The electromagnetic actuator device according to any one of the preceding claims,
**characterized in that**
permanent magnet means (9) of the actuator device assigned to the armature unit (7) and disposed so as to be displaceable with said armature unit (7) or stationary are provided and hold the armature unit (7) in the parked position, and that the magnetic holding force of the permanent magnet means (9) can be reduced in such a manner by energizing the coil unit (4) that the armature unit (7) can be displaced in the output direction by means of the spring means (14).

8. The electromagnetic actuator device according to any one of the preceding claims,
**characterized in that**
the rotation decoupling means (15) are made of non-magnetic material, in particular metal or plastic.

9. A system comprising a, preferably bistable, electromagnetic actuator device according to any one of the preceding claims, as well as an actuating element adapted to apply a force on the armature unit (7), which rotates the armature unit (7) about its displacement axis (V) when in its actuating position, in particular extracted from an actuator housing.

10. The system according to claim 9,
**characterized in that**
the system is a cam phasing system and the actuating element is a camshaft, which preferably comprises an engagement groove for the armature unit (7) and which causes the force which acts on the armature unit (7) so as to rotate the armature unit (7) about the displacement axis (V, by means of the rotation of the camshaft owing to the friction arising between the camshaft and the armature unit (7) when in the actuating position.

## Revendications

1. Dispositif d'actionneur électromagnétique ayant au moins une unité de bobine (4) stationnaire qui peut être alimentée en courant et au moins une unité d'induit (7) qui est guidée de manière déplaçable le long d'un axe de déplacement (V) et qui peut être déplacée par rapport à l'unité de bobine (4) en réaction à l'alimentation en courant de l'unité de bobine (4), l'unité d'induit (7) pouvant être déplacée dans une direction de sortie le long de l'axe de déplacement (V) entre une position de repos intérieure et stable et une position de réglage sortie et stable et pouvant être tournée autour de l'axe de déplacement (V) afin d'interagir avec un partenaire de réglage, notamment un arbre à cames, qui peut être prévu du côté de sortie de l'unité d'induit (7) et des moyens de ressort (14) du dispositif d'actionneur qui s'appuient contre un composant de butée (16) du dispositif d'actionneur disposé, de préférence, de manière non-rotative étant assignés à l'unité d'induit (7) de telle manière que lesdits moyens de ressort (14) appliquent une force de ressort à l'unité d'induit (7) pendant le déplacement (V) dans la direction de sortie, qu'ils se détendent au moins partiellement et, de préférence, qu'ils appliquent une force de ressort à l'unité d'induit (7) dans la position de réglage,
**caractérisé en ce que**,
dans la position de réglage de l'unité d'induit (7), les moyens de ressort (14) s'appuient contre l'unité d'induit (7) par des moyens de découplage de rotation (15) afin de découpler une rotation de l'unité d'induit (7) des moyens de ressort (14) autour de l'axe de déplacement (V) et/ou s'appuient contre le composant de butée (16) afin de découpler une rotation des moyens de ressort (14) autour de l'axe de déplacement (V) du composant de butée (16).

2. Dispositif d'actionneur électromagnétique selon la revendication 1,
**caractérisé en ce que**
les moyens de découplage de rotation (15) comprennent au moins un élément de palier à glissement disposé, de préférence, de manière non-rotative par rapport aux moyens de ressort (14), l'élément de palier à glissement s'appuyant contre l'unité d'induit (7) ou contre le composant de butée (16).

3. Dispositif d'actionneur électromagnétique selon la revendication 2,
**caractérisé en ce que**
l'élément de palier à glissement a une forme bombée à un côté frontal qui fait face à l'unité d'induit (7) ou au composant de butée (16) et/ou **en ce que** l'élément de palier à glissement a une surface d'appui (18) en forme de point destinée à l'appui contre l'unité d'induit (7) ou le composant de butée (15), la surface d'appui (18) étant traversée par l'axe de déplacement (V).

4. Dispositif d'actionneur électromagnétique selon la revendication 2,
**caractérisé en ce que**
l'élément de palier à glissement a une surface d'appui (18) annulaire ou en forme de disque destinée à l'appui contre l'unité d'induit (7) ou le composant de butée (16).

5. Dispositif d'actionneur électromagnétique selon l'une quelconque des revendications précédentes,
**caractérisé en ce que**
les moyens de ressort (14) comprennent un ressort hélicoïdal de compression qui s'appuie contre les moyens de découplage de rotation (15) dans la direction axiale ou **en ce que** les moyens de ressort (14) sont réalisés comme ressort hélicoïdal de compression.

6. Dispositif d'actionneur électromagnétique selon l'une quelconque des revendications précédentes,
**caractérisé en ce que**
des sections des moyens de ressort (14) sont disposées dans un canal axial de l'unité d'induit (7).

7. Dispositif d'actionneur électromagnétique selon l'une quelconque des revendications précédentes,
**caractérisé en ce que**
des moyens à aimant permanent (9) du dispositif d'actionneur sont prévus qui sont disposés à l'unité d'induit (7) et sont stationnaires ou peuvent être déplacés conjointement avec ladite unité d'induit (7) et tiennent l'unité d'induit (7) dans la position de repos et **en ce que** la force de maintien magnétique des moyens à aimant permanent (9) peut être réduite par l'alimentation en courant de l'unité de bobine (4) de telle manière que l'unité d'induit (7) peut être déplacée dans la direction de sortie au moyen des moyens de ressort (14).

8. Dispositif d'actionneur électromagnétique selon l'une quelconque des revendications précédentes,
**caractérisé en ce que**
les moyens de découplage de rotation (15) sont en matière non-magnétique, notamment métal ou plastique.

9. Système comprenant un dispositif d'actionneur électromagnétique, de préférence bistable, selon l'une quelconque des revendications précédentes, et un partenaire de réglage destiné à appliquer une force à tourner l'unité d'induit (7) autour de son axe de déplacement (V) à l'unité d'induit (7) dans sa position de réglage, notamment sortie d'un boîtier d'actionneur.

10. Système selon la revendication 9,
**caractérisé en ce que**
le système est un système de déplacement d'arbre à cames et le partenaire de réglage est un arbre à cames qui a, de préférence, une rainure d'engagement pour l'unité d'induit (7), l'arbre à cames entraînant la force qui est appliquée à l'unité d'induit (7) et qui tourne l'unité d'induit (7) autour de l'axe de déplacement (V) par la rotation en raison de la friction se produisant entre l'arbre à cames et l'unité d'induit (7) dans sa position de réglage.
